(19) Europäisches Patentamt
European Patent Office
Office européen des brevets

(11) **EP 2 770 222 A1**

(12) **EUROPEAN PATENT APPLICATION**

(43) Date of publication:
**27.08.2014 Bulletin 2014/35**

(51) Int Cl.:
***F16C 39/02*** *(2006.01)*  ***F16C 32/04*** *(2006.01)*

(21) Application number: **13157420.4**

(22) Date of filing: **01.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.02.2013 FI 20135151**

(71) Applicant: **Sulzer Pump Solutions AB**
**211 21 Malmö (SE)**

(72) Inventors:
• **Lantto, Erkki**
 **00300 Helsinki (FI)**
• **Tommila, Ville**
 **00270 Helsinki (FI)**
• **Palko, Marko**
 **02940 Espoo (FI)**

(74) Representative: **Berggren Oy Ab**
 **P.O. Box 16**
 **Antinkatu 3 C**
 **00101 Helsinki (FI)**

(54) **A machine provided with safety bearing**

(57) A machine comprises a rotor (101), a stator (102), main bearings (103), and safety bearings (104) for supporting the rotor in a situation where the main bearings are non-operating. When the rotor is supported by the main bearings, there are radial and axial clearances between the rotor and the safety bearings. A contact surface (107) of the rotor contacting the safety bearing in response to closure of the axial clearance is oblique with respect to a spatial plane perpendicular to a rotational axis of the rotor so that an angle ($\alpha$) between the rotational axis and a normal of the contact surface at a point of contact between the rotor and the safety bearing is greater than zero and at most 45 degrees. The obliqueness of the contact surface eliminates at least partly an excitation for whirling motion when the rotor is supported by the safety bearings.

Figure 1

EP 2 770 222 A1

## Description

### Field of the invention

The invention relates to a machine comprising a rotor, a stator, main bearings for supporting the rotor rotatably with respect to the stator, and at least one safety bearing for supporting the rotor rotatably with respect to the stator in a situation where the main bearings are non-operating.

### Background

In some cases there is a need to provide a rotating machine with safety bearings in addition to main bearings. The main bearings are arranged to rotatably support the rotor of the machine during normal operation, and the safety bearings are arranged to rotatably support the rotor when the main bearings are non-operating. The machine can be, for example, a turbomachine which can be e.g. a turboblower, a turbocompressor or a pump, and the main bearings can be for example contactless magnetic bearings. When the magnetic bearings become non-operating, e.g. due to an electrical power cut, the rotor is dropped to be supported by the safety bearings. It is also possible that the magnetic bearings are non-operating in the sense that they are still active but their load capacity is exceeded. Also in this case, the safety bearings have to support the rotor. Typically, there are radial and axial clearances between the rotor and the safety bearings when the rotor is supported by the main bearings in order that the safety bearings would not disturb the normal operation of the machine.

The above-mentioned radial clearance allows the rotor to whirl when being supported by the safety bearings. For example, when the safety bearings are ball bearings, the rotor typically goes into cylindrical forward whirling motion when dropped to be supported by the safety bearings. This whirling motion produces high centrifugal forces which stress the mechanical structures of the machine.

Publication US4629261 describes a safety and centering device for a rotor supported by contactless magnetic bearings. The safety and centering device provides centering support for the rotor if the contactless magnetic bearings loose power. The rotor shaft comprises a collar with a conical friction surface, and the safety bearing comprises a sleeve controlled by an electro magnet with counteracting springs and also having a conical friction surface. In a case of power failure, the springs force the two conical surfaces together and provide centering support for the rotor. The conical angle of the conical surfaces has to be relatively small so as to provide appropriate centering effect. In the examples shown in US4629261 the coning angle is about 30 degrees, where the coning angle is the angle between the conical surface and the axis of the rotational symmetry of the conical surface. A challenge related to the technical solution described in US4629261 is that it requires a good alignment between the rotational axis determined by the above-described centering effect and the principal moment of inertia of the rotor because otherwise high centrifugal forces may occur.

### Summary

The following presents a simplified summary in order to provide a basic understanding of some aspects of the invention. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention there is provided a machine comprising:

- a rotor and a stator,

- main bearings for supporting the rotor rotatably with respect to the stator, and

- at least one safety bearing for supporting the rotor rotatably with respect to the stator in a situation where the main bearings are non-operating.

There are a radial clearance and an axial clearance between the rotor and the safety bearing when the rotor is supported by the main bearings. A contact surface of the rotor arranged to contact the safety bearing in response to closure of the axial clearance is oblique with respect to a spatial plane perpendicular to a rotational axis of the rotor so that an angle between the rotational axis of the rotor and the normal of the contact surface at a point of contact between the rotor and the safety bearing is greater than zero and at most 45 degrees. Therefore, in an exemplifying case where the contact surface of the rotor is conical, the coning angle is at least 45 degrees. Thus, the conical shape of the contact surface is so blunt that the centering effect provided by the conical shape when the rotor is pushed against the safety bearing is so small that the rotor is allowed, even though not forced, to rotate around its principal moment of inertia. In conjunction with the present invention, it has been surprisingly noticed that the above-described obliqueness of the contact surface eliminates at least partly an excitation for whirling motion when the rotor is supported by the safety bearings.

A number of non-limiting and exemplifying embodiments of the invention are described in accompanied dependent claims.

Various non-limiting and exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of unrecited features. The features recited in the dependent claims are mutually freely combinable unless otherwise explicitly stated.

**Brief description of the figures**

Exemplifying embodiments of the invention and their advantages are explained in greater detail below in the sense of examples and with reference to the accompanying drawings, in which:

figure 1 shows a schematic illustration of a part of a machine according to an exemplifying embodiment of the invention,

figure 2a illustrates behaviour of a safety bearing system according to the prior art, and figure 2b illustrates behaviour of a safety bearing system according to an exemplifying embodiment of the invention,

figure 3 shows a schematic illustration of a part of a machine according to an exemplifying embodiment of the invention, and

figure 4 shows a schematic illustration of a machine according to an exemplifying embodiment of the invention.

**Description of the exemplifying embodiments**

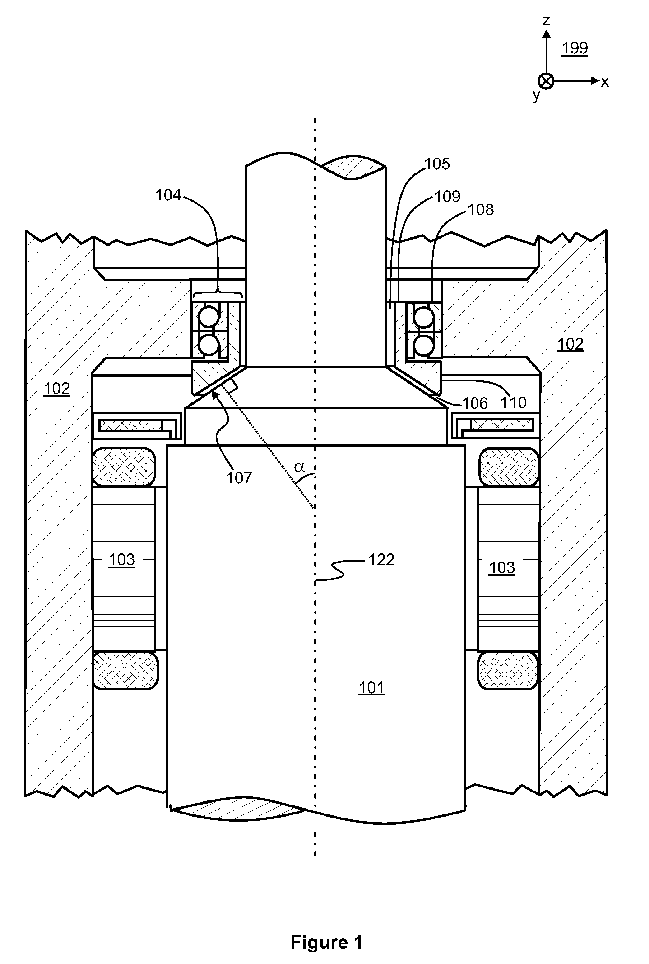

Figure 1 shows a schematic illustration of a part of a machine according to an exemplifying embodiment of the invention. The machine comprises a rotor 101, a stator 102, and main bearings 103 for supporting the rotor rotatably with respect to the stator. The machine can be, for example, an electrical machine, and the rotor 101 can be a rotor of the electrical machine and the stator 102 can be a stator of the electrical machine. In the exemplifying case illustrated in figure 1, the main bearings are contactless magnetic bearings. The machine comprises a safety bearing 104 for supporting the rotor 101 rotatably with respect to the stator 102 in a situation where the main bearings 103 are non-operating for example due to an electrical power cut. During the normal operation when the rotor 101 is supported by the main bearings 103, there are a radial clearance 105 and an axial clearance 106 between the rotor and the safety bearing 104 in order that the safety bearing would not disturb the normal operation of the machine. A contact surface 107 of the rotor arranged to contact the safety bearing in response to closure of the axial clearance 106 is oblique with respect to a spatial plane perpendicular to a rotational axis 122 of the rotor so that an angle $\alpha$ between the rotational axis of the rotor and a normal of the contact surface 107 at a point of contact between the rotor and the safety bearing is greater than zero and at most 45 degrees. The contact surface 107 of the rotor is oblique with respect to the spatial plane so that the point of contact moves, in the axial direction, towards the safety bearing 104 when the point of contact moves, in the radial direction, towards the rotational axis 122 of the rotor. In other words, the contact surface 107 tapers towards the safety bearing 104. The rotational axis 122 of the rotor is parallel with the z-axis of a coordinate system 199 and the above-mentioned spatial plane is parallel with the xyplane of the coordinate system 199. The angle $\alpha$ can be for example at least 1 degree, at least 5 degrees, at least 10 degrees, or at least 15 degrees. On the other hand, the angle $\alpha$ can be for example at most 20 degrees, at most 30 degrees, or at most 40 degrees. An advantageous value for the angle $\alpha$ can be found out with simulations and/or with experiments.

In the exemplifying case illustrated in figure 1, the contact surface 107 of the rotor is conical so that the angle $\alpha$ is substantially constant when the point of contact is moved towards or away from the rotational axis 122 of the rotor, i.e. the angle $\alpha$ is substantially constant on the contact surface 107. The conical shape of the contact surface 107 is so blunt that the centering effect provided by the conical shape when the rotor is pushed against the safety bearing 104 is so small that the rotor is allowed to rotate around its principal moment of inertia. Furthermore, when the angle $\alpha$ is very small, e.g. 1 degree, it is practically possible to design the radial clearance 105 and the axial clearance 106 substantially independently of each other. The rotor can be pushed against the safety bearing 104 for example by aerodynamic forces acting on an impeller driven by the rotor.

In a machine according to an exemplifying embodiment of the invention, the safety bearing 104 comprises a rolling contact bearing 108 comprising an outer ring supported by a frame of the machine, a rotatable inner ring, and rolling elements between the inner and outer rings. The rolling contact bearing 108 can comprise, for example, one or more ball bearings arranged to be capable of carrying axial load. In the exemplifying case illustrated in figure 1, the rolling contact bearing comprises two ball bearings arranged to be capable of carrying axial load in both directions.

In a machine according to an exemplifying embodiment of the invention, the safety bearing 104 comprises a sleeve element comprising a first part 109 being radially between the inner ring and the rotor and a second part 110 being axially between the rolling contact bearing and the contact surface 107 of the rotor. The second part 110 comprises a surface getting in contact with the rotor in response to closure of the axial clearance 106.

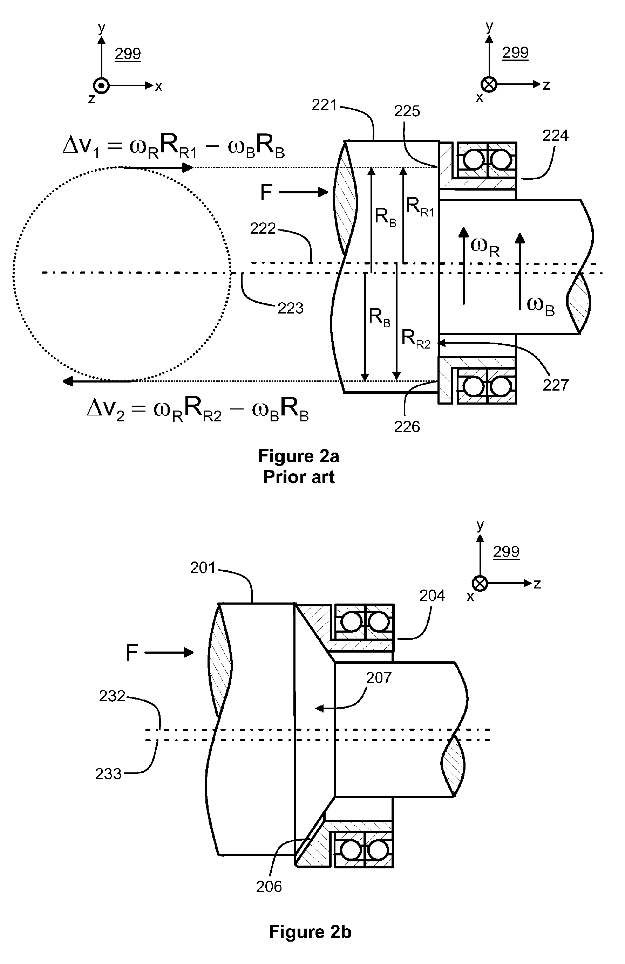

The above-described obliqueness of the contact surface 107 of the rotor eliminates at least partly an excitation for whirling motion when the rotor is supported by the safety bearing 104. This effect is illustrated below with reference to figures 2a and 2b, where figure 2a illustrates behaviour of a safety bearing system according to the prior art and figure 2b illustrates behaviour of a safety bearing system according to an exemplifying embodiment of the invention

Figure 2a illustrates a case where a rotor 221 is pushed by force F in the axial direction against a safety bearing 224. The axial direction is parallel with the z-axis of a coordinate system 299. For illustrative purposes, we assume that the rotational axis 222 of the rotor has moved in the positive y-direction of the coordinate system 299 away from the rotational axis 223 of the safety bearing. Furthermore, we assume that the rotational speed of the rotor is $\omega_R$ and the rotational speed of the safety bearing is $\omega_B$. In a contact point 225, a speed difference $\Delta v_1$, between the rotor and the safety bearing is:

$$\Delta v_1 = \omega_R R_{R1} - \omega_B R_B, \tag{1}$$

where $R_{R1}$ is the distance from the rotational axis 222 of the rotor to the contact point 225 and $R_B$ is the distance from the rotational axis 223 of the safety bearing to the contact point 225. In a contact point 226, a speed difference $\Delta v_2$ between the rotor and the safety bearing is:

$$\Delta v_2 = \omega_R R_{R2} - \omega_B R_B, \tag{2}$$

where $R_{R2}$ is the distance from the rotational axis 222 of the rotor to the contact point 226.

In a case where the rotational speeds $\omega_R$ and $\omega_B$ happen to be adapted so that there is practically no slip in the contact point 225, i.e. $\Delta v_1 \approx 0$, there is slip in the contact point 226, i.e. $\Delta v_2 \neq 0$. The slip in the contact point 226 causes a force parallel to the x-axis of the coordinate system 229. This force may represent excitation for whirling motion of the rotor 221. Correspondingly, when the rotational speeds $\omega_R$ and $\omega_B$ happen to be adapted so that there is practically no slip in the contact point 226, i.e. $\Delta v_2 \approx 0$, there is slip in the contact point 225, i.e. $\Delta v_1 \neq 0$.

This slip causes a force that may represent excitation for the whirling motion. The direction of the force is typically such that it causes forward whirling motion. Actually, when $R_{R1} \neq R_{R2}$, both $\Delta v_1$ and $\Delta v_2$ can be zero if and only if $\omega_R = \omega_B = 0$, because the equation pair constituted by the equations (1) and (2) has a non-zero determinant.

Figure 2b illustrates a case where a rotor 201 according to an exemplifying embodiment of the invention is pushed by force F in the axial direction against a safety bearing 204. For illustrative purposes we assume that the rotational axis 232 of the rotor has moved in the positive y-direction of the coordinate system 299 away from the rotational axis 233 of the safety bearing. Due to the conical shape of the contact surface 207, there is a clearance 206 between the contact surface 207 and the safety bearing. Therefore, the rotational speeds of the rotor 201 and the safety bearing 204 can adapt themselves so that there is no slip in the contact between the safety bearing and the rotor. Hence, the situation related to the prior art and illustrated with reference to figure 2a can be avoided. In the situation related to the prior art and illustrated with reference to figure 2a, there is always at least one contact with slip if the rotational axis 222 of the rotor 221 has moved with respect to the rotational axis 223 of the safety bearing 224.

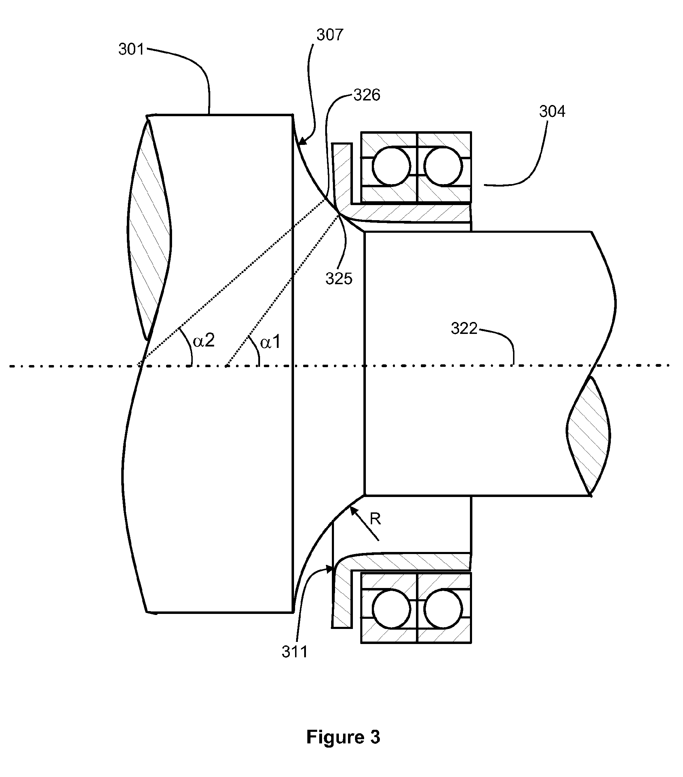

The contact surface of the rotor arranged to contact the safety bearing in response to closure of the axial clearance does not necessarily have to be conical. This is illustrated in figure 3 which shows a schematic illustration of a part of a machine according to an exemplifying embodiment of the invention.

In the exemplifying case illustrated in figure 3, the profile of the contact surface 307 of the rotor 301 is concave so that the angle between the normal of the contact surface and the rotational axis 322 of the rotor increases when the point of contact is moved towards the rotational axis 322 of the rotor. In the situation illustrated in figure 3, the safety bearing 304 contacts the rotor 301 at the point of contact 325 and the angle between the rotational axis 322 and the normal of the contact surface at the point of contact 325 is $\alpha1$. If the safety bearing 304 contacted the rotor 301 at a point 326 that is farther from the rotational axis 322 than the point of contact 325, the corresponding angle would be $\alpha2$ that is smaller than $\alpha1$.

In a machine according to an exemplifying embodiment of the invention, the profile of the contact surface 307 of the rotor is an arc of a first circle having radius R.

In a machine according to an exemplifying embodiment of the invention, a profile of a contact surface 311 of the safety bearing 304 is an arc of a second circle having a radius smaller than R as illustrated in figure 3.

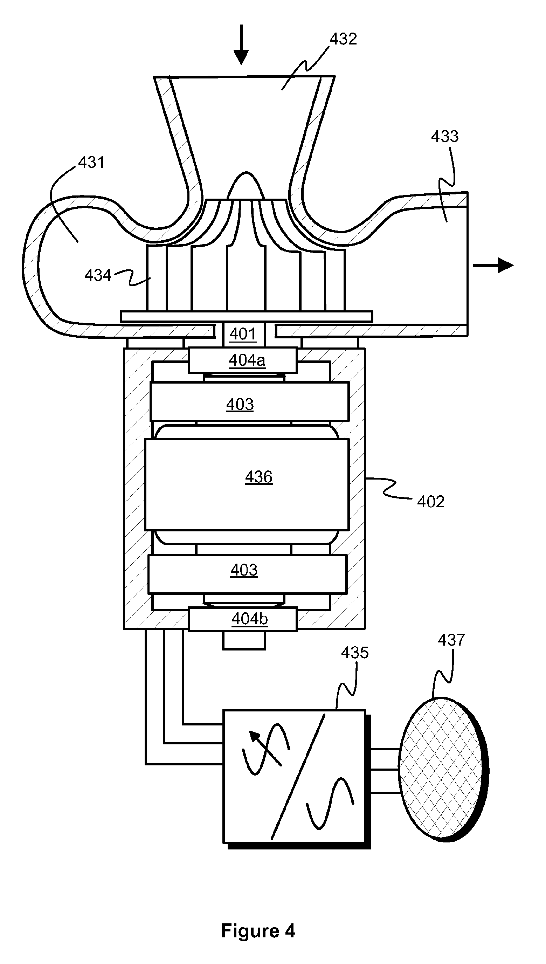

Figure 4 shows a schematic illustration of a machine according to an exemplifying embodiment of the invention. The machine comprises an electrical motor, a chamber 431 having an inlet 432 and an outlet 433 for fluid to be moved, and an impeller 434 placed in the chamber for moving the fluid. The electrical motor is fed with a converter 435 that is connected to an electric power network 437. The electrical motor can be, for example, an induction motor, a permanent magnet synchronous motor, a brushless dc-motor, or a reluctance motor. The electrical motor comprises a stator 402 and a rotor 401 connected to the impeller 434. The stator 402 comprises main bearings 403 for supporting the rotor rotatably with respect to the stator, a stator core structure 436 including stator windings, and safety bearings 404a and 404b for supporting the rotor 401 rotatably with respect to the stator in a situation where the main bearings 403 are non-operating. The main bearings 403 can be, for example, contactless magnetic bearings. In the exemplifying machine illustrated in figure 4, the impeller 434 is directly connected to the rotor 401 of the electrical motor. However, it is also possible to have a gear between the impeller and the motor driving the impeller. The electrical motor can be, for example but not necessarily, a high speed induction motor having a solid rotor. In this document, the term "high speed" means that the rotational speed of the motor is more than 5000 rpm.

During the normal operation when the rotor 401 is supported by the main bearings 403, there are a radial clearance and an axial clearance between the rotor and the safety bearings 404a and 404b in order that the safety bearings would not disturb the normal operation of the machine. A contact surface of the rotor arranged to contact the safety bearing in response to closure of the axial clearance is oblique with respect to a spatial plane perpendicular to a rotational axis of the rotor so that an angle between the rotational axis of the rotor and the normal of the contact surface at a point of contact between the rotor and the safety bearing is greater than zero and at most 45 degrees.

The specific examples provided in the description given above should not be construed as limiting the applicability and/or the interpretation of the appended claims.

**Claims**

1.  A machine comprising:

    - a rotor (101, 301, 401) and a stator (102, 402),
    - main bearings (103, 403) for supporting the rotor rotatably with respect to the stator, and
    - at least one safety bearing (104, 304, 404a, 404b) for supporting the rotor rotatably with respect to the stator in a situation where the main bearings are non-operating,
    wherein there are a radial clearance (105) and an axial clearance (106) between the rotor and the safety bearing when the rotor is supported by the main bearings, **characterized in that** a contact surface (107, 307) of the rotor arranged to contact the safety bearing in response to closure of the axial clearance is oblique with respect to a spatial plane perpendicular to a rotational axis of the rotor so that an angle ($\alpha$) between the rotational axis of the rotor and a normal of the contact surface at a point of contact between the rotor and the safety bearing is greater than zero and at most 45 degrees.

2.  A machine according to claim 1, wherein the contact surface (107) of the rotor is oblique with respect to the spatial plane so that the point of contact moves, in an axial direction, towards the safety bearing when the point of contact moves, in a radial direction, towards the rotational axis of the rotor.

3.  A machine according to claim 1 or 2, wherein the angle is at least 1 degree.

4.  A machine according to claim 3, wherein the angle is at least 5 degrees.

5.  A machine according to claim 3 or 4, wherein the angle is at most 40 degrees.

6.  A machine according to any of claims 1-5, wherein the contact surface (107) of the rotor is conical so that the angle is substantially constant when the point of contact is moved towards or away from the rotational axis of the rotor.

7. A machine according to any of claims 1-5, wherein a profile of the contact surface (307) of the rotor is concave so that the angle increases when the point of contact is moved towards the rotational axis of the rotor.

8. A machine according to claim 7, wherein the profile of the contact surface (307) of the rotor is an arc of a first circle.

9. A machine according to claim 8, wherein a profile of a contact surface (311) of the safety bearing is an arc of a second circle having a smaller radius than the first circle, the contact surface of the safety bearing being arranged to contact the rotor in response to closure of the axial clearance.

10. A machine according to any of claims 1-9, wherein the safety bearing (104) comprises a rolling contact bearing (108) comprising an outer ring supported by a frame of the machine, a rotatable inner ring, and rolling elements between the inner and outer rings.

11. A machine according to claim 10, wherein the safety bearing comprises one or more ball bearings arranged to be capable of carrying axial load.

12. A machine according to claim 10 or 11, wherein the safety bearing comprises a sleeve element comprising:

    - a first part (109) being radially between the inner ring and the rotor, and
    - a second part (110) being axially between the rolling contact bearing and the contact surface (107) of the rotor, the second part having a surface getting in contact with the rotor in response to closure of the axial clearance.

13. A machine according to any of claims 1-12, wherein the main bearings (103) are contactless magnetic bearings.

14. A machine according to any of claims 1-13, wherein the machine is an electrical machine and the rotor is a rotor of the electrical machine and the stator is a stator of the electrical machine.

15. A machine according to any of claims 1-14, wherein the machine comprises:

    - a chamber (431) having an inlet (432) and an outlet (433) for fluid to be moved, and
    - an impeller (434) connected to the rotor (401) and placed in the chamber for moving the fluid.

**Figure 1**

$$\Delta v_1 = \omega_R R_{R1} - \omega_B R_B$$

$$\Delta v_2 = \omega_R R_{R2} - \omega_B R_B$$

**Figure 2a**
**Prior art**

**Figure 2b**

**Figure 3**

**Figure 4**

Europäisches
Patentamt

European
Patent Office

Office européen
des brevets

**EUROPEAN SEARCH REPORT**

Application Number

EP 13 15 7420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/152539 A1 (SCHAEFFLER TECHNOLOGIES AG [DE]; RUHL STEFAN [DE]; BAUER JOERG [DE]; S) 15 November 2012 (2012-11-15) * page 7, line 13 - page 11, line 19; claims 11,12; figures 2,6,7 * | 1-6,10, 11,13-15 | INV. F16C39/02 F16C32/04 |
| X | US 4 628 522 A (EBERSBERGER HANS [DE]) 9 December 1986 (1986-12-09) * column 2, line 64 - column 4, line 41; claim 8; figures 1-3 * | 1-4,6, 10-14 | |
| X | WO 97/13985 A1 (SEIKO SEIKI KK [JP]; MAEJIMA YASUSHI [JP]) 17 April 1997 (1997-04-17) * abstract; figures 1,3,4,7 * | 1-4, 6-11, 13-15 | |
| X | JP S63 190930 A (KOYO SEIKO CO) 8 August 1988 (1988-08-08) * abstract; figures 1,2 * | 1-4,6, 10,11, 13,14 | |

TECHNICAL FIELDS
SEARCHED        (IPC)

F16C

The present search report has been drawn up for all claims

| Place of search | Date of completion of the search | Examiner |
|---|---|---|
| Munich | 20 September 2013 | Fischbach, Gerhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                        
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 15 7420

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2013

| Patent document cited in search report | | Publication date | Patent family member(s) | | Publication date |
|---|---|---|---|---|---|
| WO 2012152539 | A1 | 15-11-2012 | NONE | | |
| US 4628522 | A | 09-12-1986 | DE | 3407269 A1 | 29-08-1985 |
| | | | EP | 0154699 A1 | 18-09-1985 |
| | | | JP | S60155161 U | 16-10-1985 |
| | | | US | 4628522 A | 09-12-1986 |
| WO 9713985 | A1 | 17-04-1997 | JP | H09105412 A | 22-04-1997 |
| | | | WO | 9713985 A1 | 17-04-1997 |
| JP S63190930 | A | 08-08-1988 | JP | 2620855 B2 | 18-06-1997 |
| | | | JP | S63190930 A | 08-08-1988 |

EPO FORM P0459

For more details about this annex : see Official Journal of the European Patent Office, No. 12/82

**EP 2 770 222 A1**

**Patent documents cited in the description**

- US 4629261 A